# EUROPÄISCHE PATENTSCHRIFT

(11) **EP 0 676 090 B1**
(45) Veröffentlichungstag und Bekanntmachung des Hinweises auf die Patenterteilung: **16.07.1997**
(21) Anmeldenummer: 94902526.6
(22) Anmeldetag: 22.12.1993
(51) Int. Cl.: H01M 2/40, H01M 12/08

(54) **VERFAHREN ZUM LADEN UND ENTLADEN VON ZINK/BROM-BATTERIEN**
PROCESS FOR CHARGING AND DISCHARGING ZINC-BROMINE BATTERIES
PROCEDE POUR CHARGER ET DECHARGER DES BATTERIES AU ZINC-BROME

(30) Priorität: 23.12.1992 AT 2554/92
(43) Veröffentlichungstag der Anmeldung: 11.10.1995
(73) Patentinhaber: ELIN ENERGIEANWENDUNG GESELLSCHAFT M.B.H., A-1141 Wien (AT)
(72) Erfinder: TOMAZIC, Gerd, A-8680 Mürzzuschlag (AT)
(74) Vertreter: Krause, Peter
(86) Internationale Anmeldenummer: AT9300197
(87) Internationale Veröffentlichungsnummer: WO9415372

(56) Entgegenhaltungen:
- EP-A- 0 411 614
- US-A- 4 818 642
- Patent Abstracts of Japan, Band 14, Nr 467(E-989); & JP,A,02189868 (TOYOTA MOTOR CORP), 1990-07-25

## Beschreibung

Die Erfindung betrifft ein Verfahren zum Laden und Entladen von Zink/Brom-Batterien mit einer Vielzahl von, insbesondere bipolaren Elektroden, einer Vielzahl von Anoden- und Kathodenräumen, in welche, gegebenenfalls temperierte, Anolyt- oder Katolytflüssigkeit jeweils aus Vorratsbehältern einzeln zu- und abgeleitet werden, wobei beim Laden an der Kathode metallisches Zink und an der Anode atomares und/oder molekulares Brom abgeschieden wird, und Brom in einem in Wasser schwer löslichen Komplex mit einem Komplexbildner aus der wässerigen Phase gebunden wird, und die Anoden- mit den Kathodenräumen über Diaphragmen verbunden werden, wobei beim Laden und Entladen zumindest zeitweise die Anolyt- und/oder Katolytflüssigkeit in Umlauf gehalten wird, wobei im Vorratsbehälter für die Anolytflüssigkeit eine Trennung einer oleophilen von einer hydrophilen Anolytphase erfolgt, welcher über jeweilige Ab- und Zuleitung verfügt, wobei ausschließlich die wässerige Phase der Anolytflüssigkeit zeitlich nach der Zufuhr und/oder Entnahme von elektrischer Energie durch die Anodenräume geleitet wird und anschließend eine zeitliche Unterbrechung erfolgt, worauf erneut die wässerige Phase zeitweise durch die Anodenräume geleitet wird.

Ein derartiges Verfahren zum Betätigen von Zink-Brom-Batterien ist aus Patent-Abstracts of Japan, Bd. 14 Nr. 467, E 989 bekannt. Ziel dieses bekannten Verfahrens ist es, sowohl eine Energie-Einsparung als auch eine Verlängerung der Lebensdauer der Pumpe zu erreichen.

Galvanische Elemente auf Basis der Zink/Brom Paarung können besonders leistungsfähig sein. Die hohe Reaktionsfähigkeit von Brom bedingt jedoch eine besondere Materialauswahl, wobei Kunststoffe, wie beispielsweise Polyäthylen oder Polypropylen bevorzugte Materialien aufgrund ihrer hohen chemischen Beständigkeit gegenüber Brom darstellen. Bei dem Aufbau von Zink/Brom-Batterien mit Kunststoff wird so vorgegangen, daß einerseits bipolare Elektroden vorgesehen sind, die mit kunststoffgebundenem Kohlenstoff, wie beispielsweise Graphit, Aktiv-Kohle und dgl. aufgebaut sind. Zwischen den Elektroden sind Diaphragmen angeordnet, welche ebenfalls aus Kunststoff, insbesondere Polypropylen oder Polyäthylen bestehen. Die Diaphragmen bzw. Elektroden weisen an ihren Rändern Verdickungen auf, sodaß durch Pakete, aus Elektroden zwischen welchen jeweils Diaphragmen angeordnet sind, Elektrodenräume und zwar Anoden- und Kathodenräume entstehen. Diese Räume werden über eigene Leitungen angespeist und entleert. Die Elektrolyten und zwar der Anolyt und Katolyt verfügen über jeweils eigene Kreisläufe mit eigenen Vorratsbehältern und jeweils diesen zugeordnete Pumpen. Die Pumpen können gegebenenfalls von einem gemeinsamen Elektromotor angetrieben sein.

Die Speicherung des Zinks erfolgt in metallischer Form an der Oberfläche der Elektrode. Bei inadäquater Zusammensetzung des Elektrolyten oder auch bei zu hohen Stromdichten kann Dendritenbildung auftreten, wodurch einerseits Beschädigungen der Diaphragmen eintreten können und andererseits beispielsweise beim Entladen Zink-Bruchstücke entstehen können, die nicht mehr über einen elektrischen Leiter erster Klasse mit der Elektrode verbunden sind. Diese Zink-Bruchstücke verursachen Störungen, die unter anderem dazu führen können, daß einzelne Elektrodenräume nicht mit der Elektrolytflüssigkeit angespeist werden, da die Zuleitungen oder auch die Ableitungen mit den Zinkbruchstücken verstopft sind. Diese Störungen können gemäß EP-A1 277.937 gelöst werden, indem bromhältiger Elektrolyt in den Zink aufweisenden Elektrolytraum eingebracht wird, sodaß Zink nicht elektrochemisch sondern rein chemisch zur Auflösung gelangt und demgemäß eine Verbindung der Zinkbruchstücke mit der Elektrode nicht erforderlich ist. Dieses Einleiten von bromhältiger Elektrolytflüssigkeit in die Elektrodenräume, in welchen Zink abgeschieden wird, kann beispielsweise am Ende eines Entladungsvorganges erfolgen, wobei bromhältiger Elektrolyt zugeführt wird, wodurch das Zink chemisch aufgelöst werden kann.

Obwohl Zink/Brom-Batterien entwickelt wurden, bei welchen auch das Brom an der Elektrodenoberfläche eingelagert wird, ist es für eine größere Kapazität erforderlich, daß das Brom außerhalb der Elektrode gelagert wird. Ein bevorzugtes Verfahren zur Bindung des freien Broms besteht darin, daß im wässerigen Elektrolyten ein Komplexbildner gelöst wird, welcher mit dem Brom einen Komplex bildet, der nur schwerer im Wasser löslich ist, sodaß der Elektrolyt eine wässerige Phase und eine hydrophobe Phase aufweist. Die hydrophobe Phase kann gemeinsam mit der wässerigen Phase in einem Elektrolytbehälter gespeichert werden. Sowohl während des Ladens als auch des Entladens liegt an der Oberfläche der Anode neben der wässerigen Phase auch die hydrophobe Phase vor. Da die Anodenoberfläche, beispielsweise durch Einbettung von Kohlefasern, Kohlenstoffpartikelchen oder dgl. aufweist haftet zusätzlich die hydrophobe Phase an der Oberfläche der Anode. Nach einem Lade- bzw. Entladevorgang liegt somit im Anodenraum eine Bromkonzentration vor, wie sie für die Durchführung des elektrochemischen Prozesses erforderlich ist. Um die Bromkonzentration zu senken, wird gemäß internem Stand der Technik nach einer elektrochemischen Umsetzung ein Spülen des Elektrodenraumes mit der wässerigen Phase durchgeführt, wobei darauf geachtet wird, daß keine hydrophobe Phase mit hoher Bromkonzentration in demselben vorliegt. Das im Anordenraum vorliegende Brom wandert durch das Diaphragma trotz des relativ großen Brommoleküls in den Kathodenraum und löst dort metallisches Zink auf. Damit wird einerseits die Kapazität der Batterie verringert und anderseits ist die chemische Reaktion stark exotherm, sodaß eine starke Temperaturerhöhung der Batterie in der Ruhephase eintritt. Diese Temperaturerhöhung ist von besonderer Bedeutung, wenn die Batterie eine zusätzliche Umhüllung aufweist, um den Austritt von Brom selbst bei Beschädigung der Elektrolytzellen zu vermeiden. Die thermische Belastung der Anoden- bzw. Kathodenräume führt dazu, daß sowohl die Diaphragmen als auch die Elektroden, welche in der Regel mit Kunststoff aufgebaut sind, sich verwerfen. Da sowohl der Anodenals auch Kathodenraum eine besonders geringe Dicke normal zur Oberfläche der Elektroden aufweist, können derartige Verwerfungen zu unregelmäßigen Durchströmungen der Elektrodenräume und damit zu unerwünschten Widerstands- und auch Kapazitätsänderungen der Batterie führen.

Ziel der vorliegenden Erfindung ist es, eine Verlängerung der Lebensdauer der Zelle durch die Kontrolle der Elektrolyttemperatur zu erreichen.

Das erfindungsgemäße Verfahren ist dadurch gekennzeichnet, daß das Umleiten der wässrigen Phase in Abhängigkeit von der Temperatur, insbesondere der Katolytflüssigkeit im Kathodenraum, eingeleitet wird.

Mit der Erfindung ist es erstmals möglich, ohne ein eigenes Zeitglied vorzusehen, die Steuerung lediglich durch einen Thermoschalter durchzuführen. Die Temperatursteuerung kann auch beispielsweise von der Temperatur im Kathodenraum am Zellenausgang abhängig gemacht werden, da in diesem Raum die exotherme chemische Reaktion stattfindet, sodaß nicht die Wärmeleitung durch das Diaphragma als Zeitverzögerungsglied dient.

Dadurch, daß ausschließlich die wässerige Phase eingesetzt oder verwendet wird, kann jegliche zusätzliche Konzentrationserhöhung an Brom vermieden werden, womit gleichzeitig ein Auswaschen der Anodenoberfläche besonders wirksam durchgeführt werden kann. Durch das Einhalten von Pausen zwischen den einzelnen Spülphasen wird einerseits der Verbrauch an elektrischer Energie z. B. für das Umpumpen gering gehalten, anderseits kann sich auch im Stillstand beim Elektrolyten ein Ablösen des Bromkomplexes von der Anodenoberfläche durch Auflösung in der wässerigen Phase vollziehen. Dieser Lösungsprozeß ist stark zeitabhängig und erfolgt auch bei stillstehendem Elektrolyten mit ausreichender Geschwindigkeit. Die Konzentration des freien Broms im Anodenraum wird somit stark erhöht, sodaß die Durchtrittsgeschwindigkeit des Broms durch das Diaphragma zum Kathodenraum signifikant werden würde, um diesen Übertritt zu verhindern, wird der Elektrolyt im Anodenraum ausgetauscht.

Wird nach einer Stromentnahme und nach dem anschließenden Umpumpen der reinen wässrigen Phase des Elektrolyten eine zeitliche Pause vorgesehen, so kann in dieser Pause eine Auflösung des an der Faser oder dgl. noch haftenden Brom-Komplexes in die wässerige Phase erfolgen. Diese nunmehr mit Brom angereicherte wässrige Phase kann durch einen weiteren Spülvorgang leicht durch eine reine, weitgehend bromfreie wässrige Phase ersetzt werden.

Erfolgt zumindest zweimal ein Umleiten der wässrigen Phase des Elektrolyten, so ist bei einem besonders geringen energetischen Aufwand für das Umleiten des Elektrolyten eine wesentliche Verringerung der Bromkonzentration in den Anodenräumen möglich.

Werden zeitliche Pausen eingehalten, die das 10- bis 30-fache, insbesondere das 15- bis 20-fache der Zeit des Umleitens des wässrigen Elektrolyten betragen, wird dem Lösungsvorgang in der wässerigen Phase, welcher an sich langsam vor sich geht, besonders günstig Rechnung getragen.

Wird das Umleiten der wässrigen Phase durch ein Zeitschaltglied, insbesondere in Abhängigkeit von der Umleitdauer ein- und/oder ausgeschaltet, so kann eine vorgegebene Steuerung für bestimmte Größen von Batterien durchgeführt werden, wodurch besonders einfach und auch wirksam die Steuerung des Wärmehaushaltes einer Batterie gestaltet wird.

Nach einem weiteren Merkmal der Erfindung wird das Umleiten der wässerigen Phase des Elektrolyten nach der Entnahme oder Zufuhr von elektrischer Energie mit einer geringeren insbesondere mit 1/3 bis 1/2 der Strömungsgeschwindigkeit als jener während des Landens und/oder Entladens durchgeführt, so werden turbulente Strömungserscheinungen wie Wirbel und dgl. im Reservoir vermieden, sodaß eine Suspensionsbildung hintangehalten wird.

Gemäß einer weiteren Ausgestaltung der Erfindung wird zeitlich gemeinsam mit der wässerigen Phase der Anolytflüssigkeit der Katholyt umgeleitet. So erfolgt eine Abreicherung der Bromkonzentration im Kathodenraum, wobei weiters sowohl im Kathodenraum als auch im Anodenraum idente Flüssigkeitsdrucke aufrecht erhalten werden können.

Im folgenden wird die Erfindung an Hand der Beispiele und der Zeichnung näher erläutert.

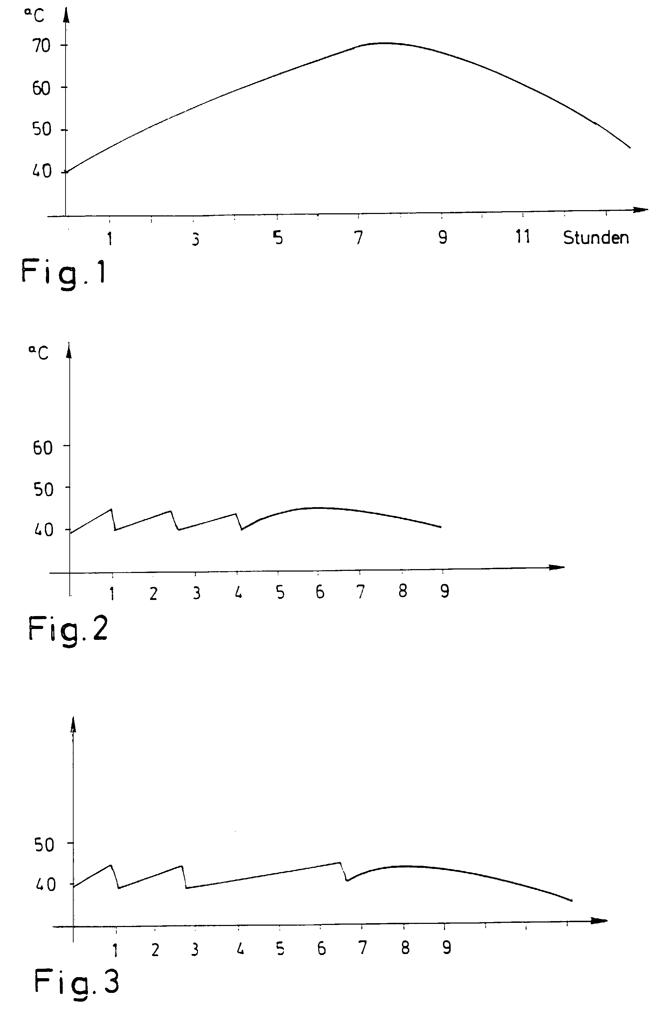

Es zeigen die Fig. 1 bis 3 den zeitlichen Verlauf der Temperatur bei verschiedenen Spülvorgängen.

### Beispiel 1:

In einer Zink/Brom-Batterie mit bipolaren Elektroden, die jeweils eine Fläche von 1200 cm² aufwiesen und die über Diaphragmen voneinander getrennt waren, wodurch Anoden- und Kathodenräume gebildet waren, die jeweils einzeln mit dem Anolyten bzw. Katolyten versorgt wurden. Die Strömungsgeschwindigkeit während des Ladens und Entladens betrug an der Elektroden-Oberfläche ca. 1 cm/sec. Beim Umleiten der Elektrolytflüssigkeit betrug die Strömungsgeschwindigkeit ca. 0,3 - 0,5 cm/sec.

Der wässerige Elektrolyt wies folgende Zusammensetzung auf:

| | |
|---|---|
| 2,8 Mol/l | Zinkbromid |
| 1 Mol/l | Kaliumchlorid |
| 1 Mol/l | Methyl-ethyl-morpholiniumbromid |

Der Komplexbildner und zwar Methyl-ethyl-morpholiniunbromid bildet mit Brom einen in Wasser schwerer löslichen Komplex und zwar lösen sich in Abhängigkeit von der Temperatur 2 bis 3 g pro Liter des Bromkomplexes in dem wässerigen Elektrolyten. Die Batterie wies 32 Elektroden auf, sodaß eine Gesamtspannung von 48 Volt nominal erreichbar war. Die Temperaturmessung erfolgte im Kathodenraum einer mittig angeordneten Kathode, wobei die Wärmeabstrahlung durch eine weitere Umhüllung der Batterie um jeglichen Austritt von Elektrolytflüssigkeit aus der Batterie zu verhindern besonders gering gehalten wurde.

Wie Fig. 1 zu entnehmen ist die Temperatur nach Beendigung des Ladevorganges und zwar wurde die Batterie bis zu 80 % ihrer Kapazität geladen, ohne daß entsprechende Spülvorgänge vorgesenen werden, bis auf ca. 70° erhöht worden. Diese Temperaturerhöhung trat 8 Stunden nach Beendigung des Ladevorganges ein. Anschließend trat eine Temperatursenkung auf. Dieser Vorgang der langfristigen Temperaturerhöhung ist durch den Übertritt von Brom aus dem Anodenraum durch das Diaphragma in den Kathodenraum erklärbar, womit eine exotherme Reaktion zwischen Brom und Zink stattfinden kann.

### Beispiel 2:

Bei einer Batterie gemäß Beispiel 1 wurde nach vorgegebenen Zeitintervallen und zwar 60 Minuten eine Spülung jeweils 4 Minuten mit dem wässerigen Elektrolyten durchgeführt. Hiebei wurde ein Absetzen des Bromkomplexes im Reservoir abgewartet und sodann der Anolyt so abgesaugt, daß keine Suspension sondern ausschließlich der Anolyt in die Anodenräume gepumpt werden konnte. Wie ersichtlich konnte durch die Spülvorgänge die zeitlich vorgegeben sind eine übermäßige thermiscne Belastung der Batterie vermieden werden, wobei mit der Steuerung über die Zeit auch eine Abhängigkeit von der Außentemperatur gegeben ist und mit dieser unterschiedliche Höchsttemperaturen innerhalb der Batterie auftreten können. Der Verlauf der Temperatur im Kathodenraum wird in Fig. 2 wiedergegeben, wobei der dreimalige kurze Abfall der Temperatur die Spülvorgänge anzeigt. Die Höchsttemperatur beträgt ca. 48°.

### Beispiel 3:

Die Steuerung der Umleitung der Anodenflüssigkeit wurde über die Temperatur des Katolyten im Kathodenraum durchgeführt, wo bei jeweils bei der Temperatur von 50°C 4 Minuten lang ein Umpumpen der Anodenflüssigkeit im Anodenraum erfolgte. Diese Art der Steuerung bietet den Vorteil, daß keinenfalls vorgegebene Temperaturen überstiegen werden und somit eine unzulässige tnermische Belastung der Batterie jedenfalls vermieden wird. Der Temperaturverlauf ist in Fig. 3 dargestelltt.

Bei den Beispielen wurde gemeinsam mit der Anodenflüssigkeit die Kathodenflüssigkeit umgeleitet.

Die Ausbildung der Batterie kann der EP-A-0149.448 entnommen werden, welche Bestandteil der vorliegenden Erfindung bildet.

Als Leitsalze können alle ionogenen Verbindungen eingesetzt werden, welche während des Lade- bzw. Entladevorganges weder abgeschieden noch zersetzt werden, z.B. KCl, NaCl.

Als Komplexbildner für das Brom können verschiedenste Verbindungen dienen, z.B. Methyl-ethyl-morpholiniumbromid, Methyl-ethyl-pyroliniunbromid.

## Patentansprüche

1. Verfahren zum Laden und Entladen von Zink/Brom-Batterien mit einer Vielzahl von, insbesondere bipolaren Elektroden, einer Vielzahl von Anoden- und Kathodenräumen, in welche, gegebenenfalls temperierte, Anolyt- oder Katolytflüssigkeit jeweils aus Vorratsbehältern einzeln zu- und abgeleitet werden, wobei beim Laden an der Kathode metallisches Zink und an der Anode atomares und/oder molekulares Brom abgeschieden wird, und Brom in einem in Wasser schwer löslichen Komplex mit einem Komplexbildner aus der wässerigen Phase gebunden wird, und die Anoden- mit den Kathodenräumen über Diaphragmen verbunden werden, wobei beim Laden und Entladen zumindest zeitweise die Anolyt- und/oder Katolytflüssigkeit in Umlauf gehalten wird, wobei im Vorratsbehälter für die Anolytflüssigkeit eine Trennung einer oleophilen von einer hydrophilen Anolytphase erfolgt, welcher über jeweilige Ab- und Zuleitung verfügt, wobei ausschließlich die wässerige Phase der Anolytflüssigkeit zeitlich nach der Zufuhr und/oder Entnahme von elektrischer Energie durch die Anodenräume geleitet wird und anschließend eine zeitliche Unterbrechung erfolgt, worauf erneut die wässerige Phase zeitweise durch die Anodenräume geleitet wird, dadurch gekennzeichnet, daß das Umleiten der wässerigen Phase in Abhängigkeit von der Elektrolyttemperatur, insbesondere der Katholytflüssigkeit im Kathodenraum, eingeleitet wird.

2. Verfahren nach Anspruch 1, dadurch gekennzeichnet, daß das Umleiten der wässerigen Phase des Elektrolyten nach Entnahme oder Zufuhr von elektrischer Energie mit einer geringeren, insbesondere mit 1/3 bis 1/2, der Strömungsgeschwindigkeit als jener während des Ladens und/oder Entladens durchgeführt wird.

3. Verfahren nach Anspruch 1 oder 2, dadurch gekennzeichnet, daß zeitlich gemeinsam mit der wässerigen Phase der Anolytflüssigkeit der Katolyt umgeleitet wird.

## Claims

1. A process for charging and discharging zinc/bromine batteries including a plurality of electrodes, specially bipolar ones, a plurality of anode and cathode chambers in which are individually introduced and from which are discharged an anolyte liquid or a catholyte liquid, tempered ones if so desired, from respective tanks, with metallic zinc being coated at the cathode side and atomic and/or molecular bromine at the anode side during discharge thereof, and with bromine being combined into a hardly water soluble complex through a complexing agent of the aqueous phase, and the anode and cathode chambers being connected by means of diaphragms, the anolyte and/or the catholyte liquid being at least temporarily maintained in a circulating condition during charge and discharge, a separation of an oil-absorbing anolyte phase from an hydrophylic anolyte phase taking place inside the anolyte liquid tank, with respective feeding and exhausting ducts being provided therefor, the sole aqueous phase of the anolyte liquid being sent through said anode chambers after some time has elapsed since the electric power supply and/or the electric power consumption, then a temporary break taking place, the aqueous phase being again sent afterwards in an intermittent manner through said anode chambers, characterized in that said aqueous phase recirculating operation is initiated according to the electrolyte temperature, especially the catholyte liquid inside the cathode chamber.

2. The process of claim 1, characterized in that the electrolyte aqueous phase recirculating operation after the electric power supply or the electric power consumption is carried out with a lower flow rate, especially equal to 1/3 - 1/2 of that during the charge and/or the discharge.

3. The process of claim 1 or 2, characterized in that said catholyte is recirculating simultaneously with the anolyte liquid aqueous phase.

## Revendications

1. Procédé de charge et de décharge de batteries d'accumulateur zinc/brome comprenant une pluralité d'électrodes, notamment bipolaires, une pluralité de chambres d'anode et de cathode dans lesquelles sont envoyés et desquelles sont évacués individuellement un liquide d'anolyte ou un liquide de catholyte, le cas échéant tempérés, à partir de réservoirs respectifs, du zinc métallique étant déposé à la cathode et du brome atomique et/ou moléculaire à l'anode lors de la charge, et du brome étant combiné en un complexe difficilement soluble dans l'eau à l'aide d'un agent complexant de la phase aqueuse, et les chambres d'anode et de cathode étant reliées par l'intermédiaire de diaphragmes, le liquide d'anolyte et/ou le liquide de catholyte étant maintenus au moins temporairement en circulation lors de la charge et de la décharge, une séparation d'une phase d'anolyte oléophile d'une phase d'anloyte hydrophile s'effectuant dans le réservoir pour le liquide d'anolyte, qui dispose de conduites d'alimentation et d'évacuation respectives, seule la phase aqueuse du liquide d'anolyte étant envoyée au travers des chambres d'anode un certain temps après l'alimentation en énergie électrique et/ou le prélèvement d'énergie électrique, une interruption temporaire ayant lieu ensuite, la phase aqueuse étant ensuite à nouveau envoyée de manière intermittente au travers des chambres d'anode, caractérisé en ce que la mise en circulation de la phase aqueuse est amorcée en fonction de la température de l'électrolyte, notamment le liquide de catholyte dans la chambre de cathode.

2. Procédé selon la revendication 1, caractérisé en ce que la mise en circulation de la phase aqueuse de l'électrolyte après le prélèvement d'énergie électrique ou l'alimentation en énergie électrique, est effectuée avec une vitesse d'écoulement plus faible, notamment 1/3 à 1/2 de celle durant la charge et/ou la décharge.

3. Procédé selon la revendication 1 ou 2, caractérisé en ce que le catholyte est mis en circulation en même temps que la phase aqueuse du liquide d'anolyte.
